# EUROPEAN PATENT SPECIFICATION

(11) **EP 4 246 677 B1**
(45) Date of publication and mention of the grant of the patent: **24.06.2026**
(21) Application number: 22736844.6
(22) Date of filing: 06.01.2022
(51) Int. Cl.: H01M 50/105, H01M 50/178, H01M 50/184, H01M 50/186

(54) **POUCH TYPE SECONDARY BATTERY, BATTERY PACK, AND METHOD FOR MANUFACTURING POUCH TYPE SECONDARY BATTERY**
BEUTELARTIGE SEKUNDÄRBATTERIE, BATTERIEPACK UND VERFAHREN ZUR HERSTELLUNG EINER BEUTELARTIGEN SEKUNDÄRBATTERIE
BATTERIE SECONDAIRE DE TYPE POCHE, BLOC-BATTERIE ET PROCÉDÉ DE FABRICATION DE BATTERIE SECONDAIRE DE TYPE POCHE

(30) Priority: 07.01.2021 KR 20210002203; 03.01.2022 KR 20220000415
(43) Date of publication of application: 20.09.2023
(60) Divisional application: 26175558.1
(73) Proprietor: LG Energy Solution, Ltd., Seoul 07335 (KR)
(72) Inventor: LIM, Seong Yoon, Daejeon 34122 (KR); OH, Sei Woon, Daejeon 34122 (KR); KIM, Woo Sup, Daejeon 34122 (KR)
(74) Representative: Plasseraud IP
(86) International application number: PCT/KR2022/000209
(87) International publication number: WO 2022/149867

(56) References cited:
- EP-A1- 1 739 766
- EP-A1- 4 037 071
- KR-A- 20110 105 737
- KR-A- 20140 064 406
- KR-A- 20140 064 406
- KR-A- 20170 020 996
- KR-A- 20170 132 565
- KR-A- 20190 023 649
- KR-A- 20210 069 594
- KR-A- 20210 069 594
- KR-B1- 100 708 023
- US-A1- 2019 393 455

## Description

### CROSS-REFERENCE TO RELATED APPLICATION

The present application claims the benefit of the priority of Korean Patent Application Nos. 10-2021-0002203, filed on January 07, 2021, and 10-2022-0000415, filed on January 03, 2022.

### TECHNICAL FIELD

The present invention relates to a pouch type secondary battery, a battery pack, and a method for manufacturing the pouch type secondary battery.

### BACKGROUND ART

Secondary batteries that are repetitively chargeable and dischargeable may be divided into cylindrical type secondary batteries, prismatic type secondary batteries, and pouch-type secondary batteries according to their structures and manufacturing methods. Among them, such a pouch-type secondary battery is manufactured by accommodating an electrode assembly in a pouch-type sheet and then sealing the sheet. When compared to other types of secondary batteries, the pouch-type secondary battery has a simple structure and high capacity per unit volume and thus is widely used in vehicle batteries or energy storage devices.

In more detail, in the pouch-type secondary battery, after forming a cup in a shape that is recessed in the pouch-type sheet, the electrode assembly is accommodated in the cup, and the pouch-type sheet is folded so that one area of the pouch-type sheet covers the electrode assembly. Then, a sealing part that seals a circumference of the electrode is formed to manufacture the pouch-type secondary battery.

The pouch type secondary battery is provided with a protruding electrode lead so as to be electrically connected to an external component. Here, the sealing part is formed to cover the electrode lead. However, according to the related art, there is a problem that cracks occur around the electrode lead.

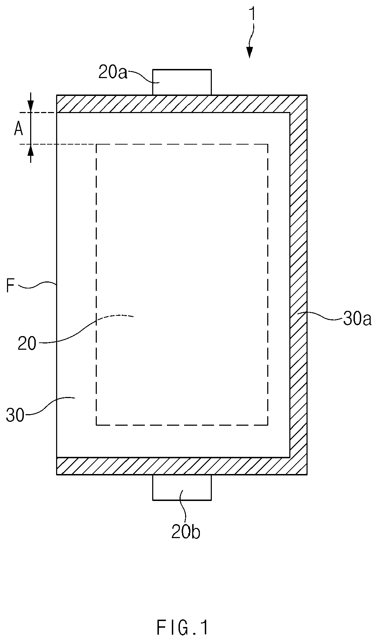

FIG. 1 is a plan view illustrating a structure of a pouch type secondary battery according to the related art.

Referring to FIG. 1, in a secondary battery 1 according to the related art, an electrode assembly 20 is accommodated in a pouch 30, and a sealing part 30a is formed around the electrode assembly 20.

An area of a circumference of the electrode assembly 20, on which the sealing part 30a is not formed, forms a folding part F at which a sheet constituting the pouch 30 is folded. According to the related art, since the sealing part is not formed on the folding part F, the sheet constituting the pouch is not bonded to the folding part F, but is in contact with the folding part F.

However, since the sheet constituting the pouch is not boned to the folding part F, when the sealing part 30a is bent, stress is concentrated to an area of the folding part F, which is adjacent to the sealing part 30a, to cause damage such as cracks in the pouch forming the folding part F.

Particularly, this problem frequently occurs in the vicinity (see reference symbol A of FIG. 1)of the sealing part forming to cover electrode leads 20a and 20b at the folding part F. For example, in the case of a battery module or a battery pack, a plurality of pouch type secondary batteries are stacked, and the electrode leads extending outward from the pouch type secondary batteries are collected to be welded so as to form a bundle of the electrode leads. As a result, the bundle of the electrode lead may be formed, and the group of the plurality of secondary batteries may be assembled to manufacture the battery module or the battery pack. However, in the assembly process, the electrode lead may be bent upward or downward with respect to a thickness direction of the secondary battery. In this case, force may be concentrated to a portion of the folding part F in the vicinity (see reference symbol A of FIG. 1) of the sealing part formed to cover the electrode leads 20a and 20b, and thus, a phenomenon, in which the sealing part is sharply folded, may occur. As a result, if the sealing part is bent over a predetermined angle, there is a problem in that the stress is concentrated to cause pouch cracks (including internal aluminum cracks). EP1739766A1 discloses a film covered electric device and a method of manufacturing the same, which prevent the occurrence of micro-crack at the root of a thermally sealed area of casing materials even if a thick electric device element is sealed by the casing materials.

KR20110105737A relates to a pouch-type case and a battery pack.

### DISCLOSURE OF THE INVENTION

### TECHNICAL PROBLEM

Therefore, an object of the present invention for solving the above problems is to solve the problem in which a pouch is damaged or cracked in an area of a folding part F, which is adjacent to a sealing part covering an electrode lead.

### TECHNICAL SOLUTION

A pouch type secondary battery according to the present invention is in accordance with claim 1.

Various embodiments are the object of dependent claims.

The invention also concerns a method for manufacturing a pouch type secondary battery according to claim 15.

Method adaptations are the object of dependent method claims.

### ADVANTAGEOUS EFFECTS

According to the present invention, the problem in which the pouch is damaged or cracked in the area of the folding part F, which is adjacent to the sealing part covering an electrode lead, may be solved.

### BRIEF DESCRIPTION OF THE DRAWINGS

FIG. 1 is a plan view illustrating a structure of a pouch type secondary battery according to the related art.
FIG. 2 is a plan view illustrating a state in which a first sealing part and a second sealing part are formed in a pouch type secondary battery according to the present invention.
FIG. 3 is a vertical cross-sectional view illustrating the pouch type secondary battery when taken along line C-C of FIG. 2.
FIG. 4 is an enlarged view illustrating a configuration of a first sealing part of a pouch type secondary battery according to a first embodiment of the present invention.
FIG. 5 is an enlarged view illustrating a configuration a first sealing part of a pouch type secondary battery according to a second embodiment of the present invention.
FIG. 6 is an enlarged view illustrating a configuration of a first sealing part of a pouch type secondary battery according to a third embodiment of the present invention.
FIG. 7 is a plan view illustrating a state in which the first sealing part and the second sealing part are formed in the pouch type secondary battery according to the present invention.
FIG. 8 is a plan view illustrating a state in which the first sealing part is formed through a normal lead sealing process and an additional sealing process.

### MODE FOR CARRYING OUT THE INVENTION

Hereinafter, a pouch type secondary battery, a battery pack, and a method for manufacturing the pouch type secondary battery according to the present invention will be described with reference to the drawings.

### Pouch type secondary battery and battery pack

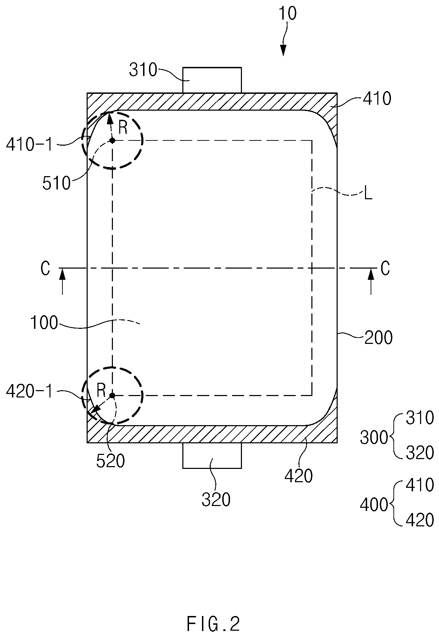

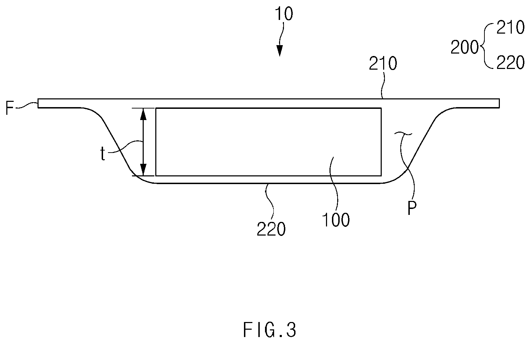

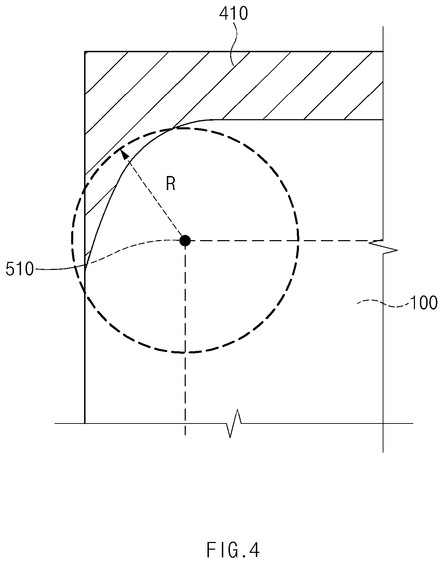

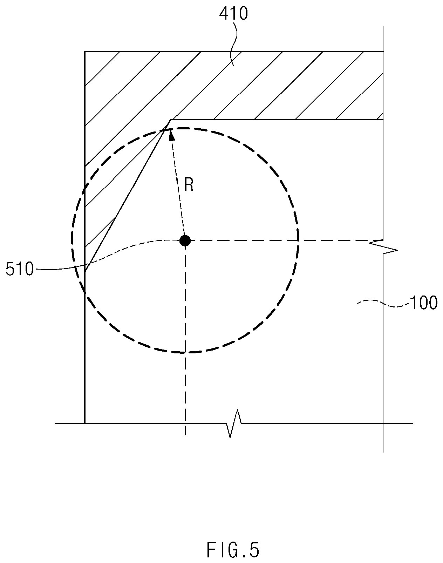

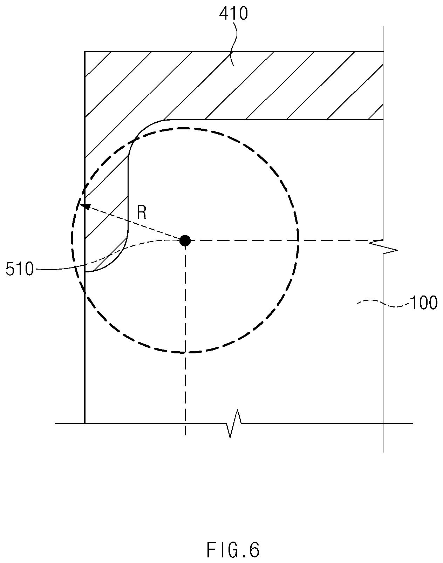

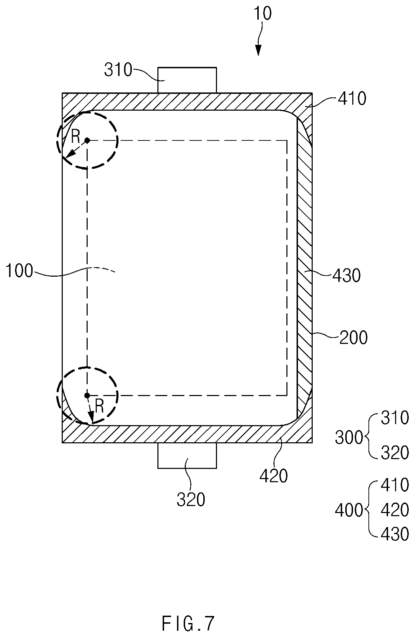

FIG. 2 is a plan view illustrating a state in which a first sealing part and a second sealing part are formed in a pouch type secondary battery according to the present invention. FIG. 3 is a vertical cross-sectional view illustrating the pouch type secondary battery when taken along line C-C of FIG. 2. FIG. 4 is an enlarged view illustrating a configuration of a first sealing part of a pouch type secondary battery according to a first embodiment of the present invention. FIG. 5 is an enlarged view illustrating a configuration a first sealing part of a pouch type secondary battery according to a second embodiment of the present invention. FIG. 6 is an enlarged view illustrating a configuration of a first sealing part of a pouch type secondary battery according to a third embodiment of the present invention. FIG. 7 is a plan view illustrating a state in which the first sealing part and the second sealing part are formed in the pouch type secondary battery according to the present invention.

As illustrated in FIGS. 2, 3, and 7, a pouch type secondary battery 10 (hereinafter, referred to as a 'secondary battery') according to the present invention may include an electrode assembly 100 having a structure, in which electrodes and a separator are alternately disposed, and a pouch type exterior 200 (hereinafter, referred to as an 'exterior') in which a cup P having a shape recessed to accommodate the electrode assembly 100 is formed.

As illustrated in FIG. 3, the exterior 200 may include a first area 210 and a second area 220. Here, in the exterior 200, a folding part F formed on a boundary between the first area 210 and the second area 220 so that the first area 210 and the second area 220 face each other as the first area 210 is folded with respect to the second area 220. This may be considered that the second area 220 is folded with respect to the first area 210 at the folding part F. Although FIG. 3 illustrates a state in which the cup P is formed in the second area 220 provided at a lower side in the exterior 200, unlike this, the cup P may be formed in the first area 210 provided at an upper side, or the cup P may be formed in both the first area 210 and the second area 220. In FIG. 2, the boundary L that is a circumference of the cup P formed in the exterior 200 is illustrated by a dotted line.

Subsequently, referring to FIGS. 2 and 7, the secondary battery 10 according to the present invention further includes electrode leads 310 and 320 which are electrically connected to the electrode assembly 100 and protrude outward through the circumference of the exterior 200.

Here, the electrode leads 310 and 320 may include a first electrode lead 310 protruding outward through an upper circumference of the exterior 200 and a second electrode lead 320 protruding outward through a lower circumference of the exterior 200 and having a polarity different from that of the first electrode lead. That is, in the secondary battery 10 according to the present invention, the first electrode lead 310 and the second electrode lead 320 may protrude in opposite directions (that the first electrode lead and the second electrode lead protrude in the opposite directions are merely one embodiment of the present invention, and thus, the present invention is not limited thereto, and a case in which the first electrode lead and the second electrode lead protrude in the same direction may be applied to the technical idea of the present invention).

Referring to FIGS. 2 and 7, a sealing part 400 may be formed on the exterior 200 along a circumference of the electrode assembly 100. The sealing part 400 may be formed by bonding the first area 210 and the second area 220 of the exterior 200 to each other. Here, the sealing part 400 may be formed on an area of the exterior 200 surrounding the circumference of the electrode assembly 100 except for the area on which the folding part F is formed.

The sealing part 400 may include a first sealing part 410 formed to cover the first electrode lead 310, a second sealing part 420 formed to cover the second electrode lead 320, and a third sealing part 430 formed to connect the first sealing part 410 to the second sealing part 420. Referring to FIG. 7, an upper end of the third sealing part 430 may be connected to the first sealing part 410, and a lower end of the third sealing part 430 may be connected to the second sealing part 420. Also, the third sealing part 430 may be formed to face the folding part F with the electrode assembly 100 or the cup P therebetween. Also, as will be described later, the third sealing part 430 may be formed later in time than the first sealing part 410 and the second sealing part 420 (however, the present invention is not limited thereto, and if one sealing tool is used as necessary, the third sealing part 430, the first sealing part 410, and the second sealing part 420 may be formed at the same time).

Referring to FIGS. 2 and 7, one end of the first sealing part 410 of the pouch type secondary battery 10 according to the present invention or one end of the second sealing part 420 may be formed to face the folding part F. In addition, one end 410-1 of the first sealing part 410 according to the present invention may be formed on an area within a predetermined distance R from an upper corner part 510 of the circumference of the cup P of the exterior 200, and one end 420-1 of the second sealing part 420 may be formed on the area within a predetermined distance R from a lower corner part 520 of the circumference of the cup P of the exterior 200. FIG. 2 illustrates a structure in which the one end 410-1 of the first sealing part 410 is formed on a virtual circle having a radius R centered on the upper corner part 510 of the circumference of the cup P. The fact that the one end 410-1 of the first sealing part 410 is formed on the area within the predetermined distance R from the upper corner part 510 of the circumference of the cup P of the exterior 200 means that the one end 410-1 of the first sealing part 410 is formed within a range of the virtual circle.

According to the present invention, as illustrated in FIGS. 2 and 7, both a left end and a right end of the first sealing part 410 may be formed on the area within the predetermined distance R from the upper corner part 510 of the circumference of the cup P, and both a left end and a right end of the second sealing part 410 may also be formed on the area within the predetermined distance R from the lower corner part 520 of the circumference of the cup P.

Specifically, the left and right ends of the first sealing portion may be formed on the area within the predetermined distance R from the upper left corner part and on the area within the predetermined distance R from the upper right corner part of the circumference the cup P, respectively. In addition, the left and right ends of the second sealing portion may be formed on the area within the predetermined distance R from the lower left corner part and on the area within the predetermined distance R from the lower right corner part of the circumference the cup P, respectively. In this case, the predetermined distance R may be 5 mm. If the predetermined distance R is too large, the sealing part may not reach a cracking area of the pouch, and if the predetermined distance R is too small, the sealing may have to be performed up to an excessive and unnecessary position. Thus, the predetermined distance R may be 5 mm.

However, unlike this, according to another embodiment of the present invention, only one end (i.e., only the left end in FIG. 7) of left and right ends of a first sealing part 410, which is provided adjacent to a folding part F, may be formed on an area within a predetermined distance R from an upper corner part 510 of a circumference of a cup P, and only one end (i.e., only the left end in FIGS. 2 and 7), which is provided to be adjacent to the folding part F, of the left and right ends of the second molding part 420 may be formed on an area within the predetermined distance R from a lower corner part 520 of the circumference of the cup P. In this case, the predetermined distance R may also be 5 mm. If the predetermined distance R is too large, the sealing part may not reach a cracking area of the pouch, and if the predetermined distance R is too small, the sealing may have to be performed up to an excessive and unnecessary position.

According to the present invention, the one end of the first sealing part 410 that covers the first electrode lead 310 and the second electrode lead 320 may be formed to extend toward the folding part F so as to enter the area within the predetermined distance R from the upper corner part 510 of the circumference of the cup P when compared to the related art or may be formed to extend toward the folding part F so as to enter the area within the predetermined distance R from the lower corner part 520 of the circumference of the cup P when compared to the related art, thereby preventing cracks from occurring at the folding part or the vicinity of the folding part due to concentration of stress.

Particularly, according to the present invention, since an end of the ends of the first sealing part and the second sealing part, which is provided to be adjacent to the folding part, extends downward or upward toward the folding part, the occurrence of the cracks may be prevented even the area (see reference symbol A of FIG. 1) on which the cracks frequently occur when the pouch type secondary battery is manufactured according to the related art.

For example, in the process of assembling the group of the plurality of secondary batteries to manufacture the battery module and the battery pack, the electrode lead may be bent upward or downward with respect to the thickness direction of the secondary battery. In this case, since the folding part F that is in the vicinity (see reference symbol A of FIG. 1) of the sealing part formed to cover the electrode leads 20a and 20b is sealed in the present invention, a phenomenon, in which the folding part F is sharply folded, may not occur to prevent the pouch cracks from occurring due to the concentration of the stress. That is, if the lead is not sealed, the lead is bent upward or downward with respect to the thickness direction of the secondary battery, a portion A of the pouch may be sharply folded. However, if the lead is sealed, even though the lead is bent, the portion A of the sealing part of the pouch may be only curved (i.e., bent), but may not sharply folded. Thus, the occurrence of the cracks of the pouch may be prevented.

### Embodiment 1

As illustrated in FIG. 4, according to a first embodiment of the present invention, an inner circumference of an area of the first sealing part 410, which is provided on an area within a predetermined distance R from an upper corner part 510 of a circumference of a cup P may have a curved shape. In addition, according to the first embodiment, an inner circumference of an area of a second sealing part 420 within a predetermined distance R from a lower corner part 520 of the circumference of the cup P may also have a curved shape.

### Embodiment 2

On the other hand, as illustrated in FIG. 5, according to a second embodiment of the present invention, an inner circumference of an area of the first sealing part 410, which is provided on an area within a predetermined distance R from an upper corner part 510 of a circumference of a cup P may have a straight line shape. In addition, according to the second embodiment, an inner circumference of an area of a second sealing part 420 within a predetermined distance R from a lower corner part 520 of the circumference of the cup P may also have a straight line shape.

### Embodiment 3

Alternatively, as illustrated in FIG. 6, according to a third embodiment of the present invention, an inner circumference of an area of the first sealing part 410, which is provided on an area within a predetermined distance R from an upper corner part 510 of a circumference of a cup P may include a straight line and a curve. In addition, according to the first embodiment, an inner circumference of an area of a second sealing part 420 within a predetermined distance R from a lower corner part 520 of the circumference of the cup P may also include a straight line and a curve.

Here, according to the first and third embodiments of the present invention, each of the curves formed on the inner circumferences of the first sealing part 410 and the second sealing part 420 may be formed to be concave when viewed from the electrode assembly 100 (see FIG. 4). However, the curve may be formed to be convex when viewed from the electrode assembly 100 (see FIG. 6). In addition, it may be formed to include both a concave shape and a convex shape.

### Embodiment 4

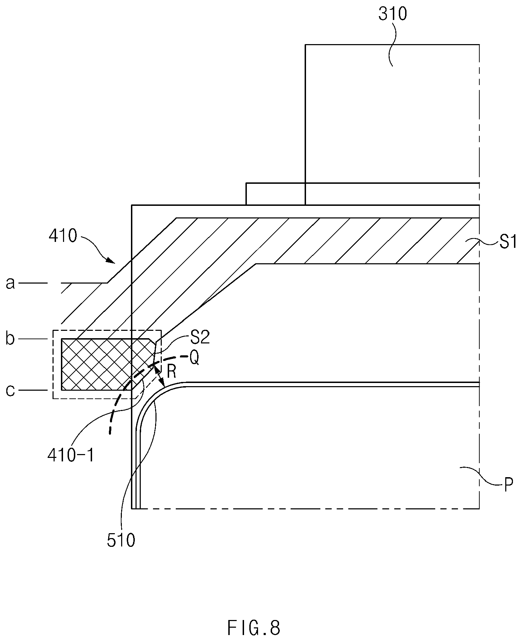

According to a fourth embodiment of the present invention, at least one of an upper corner part 510 or a lower corner part 520 may be formed in a round shape. Referring to FIG. 8, FIG. 8 illustrates a case in which the upper corner part 510 is formed in a round shape.

In this case (i.e., when the upper corner part is formed in the round shape), the fact that one end 410-1 of a first sealing part 410 is formed on an area within a predetermined distance R from the upper corner part 510 of a circumference of a cup P means that the one end 410-1 of the first sealing part 410 is formed on an area within a range of a virtual arc Q spaced a predetermined distance R from the upper corner part 510 having the rounded shape. In this case, the predetermined distance R may be 5 mm.

The analysis in this manner may be applied in the same manner even when the lower corner part 520 is formed in a round shape. Also, at this time, a predetermined distance that is a distance from the lower corner part 520 may be 5 mm.

In the secondary battery 10 according to the present invention, the third sealing part 430 may be bent in a direction of a thickness t (see FIG. 3) of the electrode assembly 100. In this case, a volume occupied by the third sealing part 430 may be reduced to improve capacity per unit volume of the secondary battery.

The battery pack according to the present invention may include a plurality of secondary batteries 10. The content with respect to the secondary battery 10 are substituted with the above contents.

### Method for manufacturing pouch type secondary battery

Referring to FIGS. 2 to 7, a method for manufacturing a pouch type secondary battery according to the present invention may include a process of preparing an electrode assembly 100 having a structure, in which electrodes and separators are alternately disposed, and a pouch type exterior 200, in which a cup P having a recessed shape is formed, a process of accommodating the electrode assembly 100 in the cup P, a process of folding the exterior 200 so that one area 210 and the other area 220 of the exterior 200 face each other, a process of disposing a first electrode lead 310 protruding outward through an upper circumference of the exterior 200 and a second electrode lead 320 protruding outward through a lower circumference of the exterior 200, and a process of forming a first sealing part 410 on the exterior 200 to cover the first electrode lead 310 and forming a second sealing part 420 on the exterior 200 to cover the second electrode lead 320.

Here, in the process of forming the first sealing part 410 and the second sealing part 420, one end of the first sealing part 410 may be sealed to be formed on an area within a predetermined distance R from an upper corner part 510 of a circumference of the cup P, and one end of the second sealing part 420 may be sealed to be formed on an area within a predetermined distance R from a lower corner part 520 of the circumference of the cup P. Here, the predetermined distance R may be 5 mm.

In addition, at this time, the one end of the first sealing part 410 may be an end of the left end and the right end of the first sealing part 410, which is provided to be adjacent to a folding part F, and the one end of the second sealing part 420 may be an end of the left end and the right end of the second sealing part 420, which is provided to be adjacent to the folding part F.

The process of forming the first sealing part 410 may be, more specifically, a process of performing sealing in two stages. The two-stage sealing may mean a normal lead sealing process and an additional sealing process.

FIG. 8 is a plan view illustrating a state in which the first sealing part 410 is formed through the normal lead sealing process and the additional sealing process.

Referring to FIG. 8, the normal lead sealing process may mean a process of sealing an area of the sealing part, which is disposed above the area within the predetermined distance from the upper corner part of the circumference of the cup P, through a sealing tool so that a pouch of a first area 210 and a pouch of a second area 220 cover a first electrode lead 310. As a result, the normal lead sealing area S1 may be formed.

In addition, the additional sealing process may mean a process of sealing the area within the predetermined distance from the upper corner part of the circumference of the cup P through the sealing tool so that the pouch of the first area 210 and the pouch of the second area 220 are bonded to each other. As a result, the additional lead sealing area S2 may be formed. The portion inside the virtual arc Q, which is spaced the predetermined distance R from the upper corner part 510, may be sealed in the additional sealing process. The area inside the virtual arc Q may mean a pouch area closer to the upper corner part 510 with respect to the virtual arc Q.

The first sealing part 410 may include a normal lead sealing area S1 and an additional sealing area S2 through the sealing process.

Here, the normal lead sealing area S1 may be an area sealed through the sealing tool so that an area disposed above the area within the predetermined distance from the upper corner part of the circumference of the cup covers the first electrode lead.

The additional sealing area S2 may be an area on which the area within the predetermined distance from the upper corner part of the circumference of the cup is sealed so that the pouch of the first area 210 and the pouch of the second area 220 are bonded to each other.

In the method for manufacturing the pouch type secondary battery according to the present invention, the normal lead sealing area S1 and the additional sealing S2 have different thicknesses for each section. In this case, the method for manufacturing the pouch type secondary battery according to the present invention may be secondary batteries having different sealing thicknesses for each section in the normal lead sealing area S1 and the additional sealing area S2.

For example, referring to FIG. 8, the sealing thickness may be different in a section a-b and a section b-c of FIG. 8. The section a-b may represent a normal pouch-pouch sealing thickness (reference sealing thickness), and the section b-c may have a thickness greater or less than that of the section a-b. Also, the sealing thickness may be constant or variable even within one section. That is, the sealing thickness may be constant within one section a-b, but the present invention is not limited thereto, and the sealing thickness may constantly increase or decrease in the section a-b. Furthermore, the sealing thickness may be irregularly changed even within one section. Also, the above description may be applied even within one section b-c.

When the sealing form is implemented in such various forms, since an optimal sealing part for preventing the pouch cracks from occurring is configured in accordance with a case in which a size, shape, type, material, thickness, etc. of the pouch vary, an excellent secondary battery in which the prevention of occurrence of the pouch cracks, which is an inherent effect of the present invention, is maximized for each pouch type may be manufactured.

In addition, referring to FIG. 7, the method for manufacturing the pouch type secondary battery according to the present invention may further include a process of forming a third sealing part 430 formed along a circumference of the electrode assembly 100 to connect the first sealing part 410 to the second sealing part 420. The third sealing part 430 may be formed after forming the first sealing part 410 and the second sealing part 420 (however, if one sealing tool is used as described above, the third sealing part 430, the first sealing part 410, and the second sealing part 420 may be formed at the same time). Here, one end of the third sealing part 430 may be connected to the first sealing part 410, and the other end of the third sealing part 430 may be connected to the second sealing part 420.

While the embodiments of the present invention have been described with reference to the specific embodiments, it will be apparent to those skilled in the art that various changes and modifications may be made without departing from scope of the invention as defined in the following claims.

### [Description of the Symbols]

10: Secondary battery
100 : Electrode assembly
200: Exterior
210: First area
220: Second area
300; Electrode lead
310 : First electrode lead
320 : Second electrode lead
400: Sealing part
410: First sealing part
410-1: One end of first sealing part
420: Second sealing part
420-1: One end of second sealing part (420)
430: Third sealing part
510: Upper corner part of circumference of cup
520: Lower corner part of circumference of cup
P: Cup
L: Boundary of cup
F: Folding part
S1: Normal lead sealing area
S2: Additional sealing area
Q: Virtual arc spaced predetermined distance from upper corner part

## Claims

1. A pouch type secondary battery (10) comprising:
an electrode assembly (100) having a structure, in which electrodes and a separator are alternately disposed;
a pouch type exterior (200) in which a cup (P) having a shape recessed to accommodate the electrode assembly (100) is formed; and
an electrode lead (300) electrically connected to the electrode assembly (100) and protruding outward through a circumference of the exterior (200),
wherein a sealing part (400) is formed on the exterior (200) along the circumference of the electrode assembly (100),
the electrode lead (300) comprises a first electrode lead (310) protruding outward through an upper circumference of the exterior (200),
the sealing part (400) comprises a first sealing part (410) formed to cover the first electrode lead (310), and
one end (410-1) of the first sealing part (410) is formed on an area within a predetermined distance (R) from an upper corner part (510) of a circumference of the cup (P),
wherein the area within the predetermined distance (R) from the upper corner part (510) of the circumference of the cup (P) is defined as one of:
a virtual circle having a radius (R) centered on the upper corner part (510) of the circumference of the cup (P), or
a virtual arc (Q) spaced the predetermined distance (R) from the upper corner part (510) having a rounded shape
and wherein the predetermined distance (R) is 5 mm.

2. The pouch type secondary battery (10) of claim 1, wherein left and right ends of the first sealing part (410) are formed on an area within said predetermined distance (R) from an upper left corner part (510) and an area within said predetermined distance (R) from an upper right corner part of the circumference of the cup (P), respectively.

3. The pouch type secondary battery (10) of claim 1, wherein the electrode lead (300) comprises a second electrode lead (320) protruding outward through a lower circumference of the exterior (200),
the sealing part (400) comprises a second sealing part (420) formed to cover the second electrode lead (320), and
one end of the second sealing part (420) is formed on an area within said predetermined distance (R) from a lower corner part (520) of the circumference of the cup (P).

4. The pouch type secondary battery (10) of claim 1, wherein an inner circumference of an area of the first sealing part (410), which is provided on an area within said predetermined distance (R) from the upper corner part (510) of the circumference of the cup (P) has a straight-line shape.

5. The pouch type secondary battery (10) of claim 1, wherein an inner circumference of an area of the first sealing part (410), which is provided on an area within said predetermined distance (R) from the upper corner part (510) of the circumference of the cup (P) has a curved shape.

6. The pouch type secondary battery (10) of claim 1, wherein an inner circumference of an area of the first sealing part (410), which is provided on an area within said predetermined distance (R) from the upper corner part (510) of the circumference of the cup (P) has straight-line and curved shapes.

7. The pouch type secondary battery (10) of claim 5 or 6, wherein the curved shape is formed to be concave when viewed from the electrode assembly (100).

8. The pouch type secondary battery (10) of claim 5 or 6, wherein the curved shape is formed to be convex when viewed from the electrode assembly (100).

9. The pouch type secondary battery (10) of claim 3, wherein the pouch type exterior (200) comprises a first area (210) and a second area (220),
in the pouch type exterior (200), a folding part (F) is formed on a boundary between the first area (210) and the second area (220) so that, when the first area (210) is folded with respect to the second area (220), the first area (210) and the second area (220) face each other,
one end of a left end and a right end of the first sealing part (410), which is provided to be adjacent to the folding part (F), is formed on an area within said predetermined distance (R) from the upper corner part (510) of the circumference of the cup (P), and
one end of a left end and a right end of the second sealing part (420), which is provided to be adjacent to the folding part (F), is formed on an area within said predetermined distance (R) from the lower corner part (520) of the circumference of the cup (P).

10. The pouch type secondary battery (10) of claim 3, wherein the sealing part (400) further comprises a third sealing part (430) formed to connect the first sealing part (410) to the second sealing part (420).

11. The pouch type secondary battery (10) of claim 10, wherein an upper end of the third sealing part (430) is connected to the first sealing part (410), and
a lower end of the third sealing part (430) is connected to the second sealing part (420).

12. The pouch type secondary battery (10) of any one of claims 1 to 11, wherein at least one or more of the upper corner part (510) and the lower corner part (520) have a rounded shape.

13. The pouch type secondary battery (10) of claim 1, wherein the first sealing part (410) comprises:
a normal lead sealing area (S1) on which an area disposed above the area within said predetermined distance (R) from the upper corner part (510) of the circumference of the cup (P) is sealed to cover the first electrode lead (310) by a sealing tool; and
an additional sealing area (S2) on which the area within the predetermined distance (R) from the upper corner part (510) of the circumference of the cup (P) is sealed by the sealing tool.

14. The pouch type secondary battery (10) of claim 13, wherein the normal lead sealing area (S1) and the additional sealing area (S2) have different sealing thicknesses for each section.

15. A method for manufacturing a pouch type secondary battery (10), the method comprising:
a process of preparing an electrode assembly (100) having a structure, in which electrodes and separators are alternately disposed, and a pouch type exterior (200), in which a cup (P) having a recessed shape is formed;
a process of accommodating the electrode assembly (100) in the cup (P);
a process of folding the exterior (200) so that one area and the other area of the exterior face each other;
a process of disposing a first electrode lead (310) protruding outward through an upper circumference of the exterior (200) and a second electrode lead (320) protruding outward through a lower circumference of the exterior (200);
a process of forming a first sealing part (410) on the exterior (200) to cover the first electrode lead (310); and
a process of forming a second sealing part (420) on the exterior (200) to cover the second electrode lead (320),
wherein, in the process of forming the first sealing part (410), one end of the first sealing part (410) is sealed to be formed on an area within a predetermined distance (R) from the upper corner part (510) of a circumference of the cup (P),
wherein the area within the predetermined distance (R) from the upper corner part (510) of the circumference of the cup (P) is defined as one of:
a virtual circle having a radius (R) centered on the upper corner part (510) of the circumference of the cup (P), or
a virtual arc (Q) spaced a predetermined distance (R) from the upper corner part (510) having a rounded shape,
and wherein the predetermined distance (R) is 5 mm.

16. The method of claim 15, wherein the process of forming the first sealing part (410) comprises a two-stage sealing process comprising a normal lead sealing process and an additional sealing process.

17. The method of claim 16, wherein the normal lead sealing process is a process of sealing an area, which is disposed above the area within the predetermined distance (R) from the upper corner part (510) of the circumference of the cup (P), through a sealing tool so that a pouch of the first area (210) and a pouch of the second area (220) cover the first electrode lead (310) to form a normal lead sealing area (S1), and
the additional lead sealing process is a process of sealing an area, which is disposed within the predetermined distance (R) from the upper corner part (510) of the circumference of the cup (P), through the sealing tool so that the pouch of the first area (210) and the pouch of the second area (220) are bonded to each other to form an additional sealing area (S2).

18. The method of claim 17, wherein, in the process of forming the first sealing part (410), the normal lead sealing area (S1) and the additional sealing area (S2) have different sealing thicknesses for each section.

## Patentansprüche

1. Beuteltyp-Sekundärbatterie (10), umfassend:
eine Elektrodenanordnung (100), welche eine Struktur aufweist, in welcher Elektroden und ein Separator abwechselnd angeordnet sind;
eine Beuteltyp-Außenseite (200), in welcher eine Tasse (P) gebildet ist, welche eine Form aufweist, welche dazu ausgenommen ist, die Elektrodenanordnung (100) aufzunehmen; und
eine Elektrodenleitung (300), welche elektrisch mit der Elektrodenanordnung (100) verbunden ist und nach außen durch einen Umfang der Außenseite (200) vorsteht,
wobei ein Dichtungsteil (400) an der Außenseite (200) entlang des Umfangs der Elektrodenanordnung (100) gebildet ist,
die Elektrodenleitung (300) eine erste Elektrodenleitung (310) umfasst, welche nach außen durch einen oberen Umfang der Außenseite (200) vorsteht,
der Dichtungsteil (400) einen ersten Dichtungsteil (410) umfasst, welcher dazu gebildet ist, die erste Elektrodenleitung (310) zu bedecken, und
ein Ende (410-1) des ersten Dichtungsteils (410) an einem Bereich innerhalb eines vorbestimmten Abstands (R) von einem oberen Eckteil (510) eines Umfangs der Tasse (P) gebildet ist,
wobei der Bereich innerhalb des vorbestimmten Abstands (R) von dem oberen Eckteil (510) des Umfangs der Tasse (P) definiert ist als eines aus:
einem virtuellen Kreis, welcher einen Radius (R) aufweist, welcher auf den oberen Eckteil (510) des Umfangs der Tasse (P) zentriert ist, oder
einen virtuellen Bogen (Q), welcher den vorbestimmten Abstand (R) von dem oberen Eckteil (510) beabstandet ist, welcher eine abgerundete Form aufweist,
und wobei der vorbestimmte Abstand (R) 5 mm beträgt.

2. Beuteltyp-Sekundärbatterie (10) nach Anspruch 1, wobei linke und rechte Enden des ersten Dichtungsteils (410) an einem Bereich innerhalb des vorbestimmten Abstands (R) von einem oberen linken Eckteil (510) bzw. einem Bereich innerhalb des vorbestimmten Abstands (R) von einem oberen rechten Eckteil des Umfangs der Tasse (P) gebildet sind.

3. Beuteltyp-Sekundärbatterie (10) nach Anspruch 1, wobei die Elektrodenleitung (300) eine zweite Elektrodenleitung (320) umfasst, welche nach außen durch einen unteren Umfang der Außenseite (200) vorsteht, der Dichtungsteil (400) einen zweiten Dichtungsteil (420) umfasst, welcher dazu gebildet ist, die zweite Elektrodenleitung (320) zu bedecken, und ein Ende des zweiten Dichtungsteils (420) an einem Bereich innerhalb des vorbestimmten Abstands (R) von einem unteren Eckteil (520) des Umfangs der Tasse (P) gebildet ist.

4. Beuteltyp-Sekundärbatterie (10) nach Anspruch 1, wobei ein innerer Umfang eines Bereichs des ersten Dichtungsteils (410), welcher an einem Bereich innerhalb des vorbestimmten Abstands (R) von dem oberen Eckteil (510) des Umfangs der Tasse (P) bereitgestellt ist, eine geradlinige Form aufweist.

5. Beuteltyp-Sekundärbatterie (10) nach Anspruch 1, wobei ein innerer Umfang eines Bereichs des ersten Dichtungsteils (410), welcher an einem Bereich innerhalb des vorbestimmten Abstands (R) von dem oberen Eckteil (510) des Umfangs der Tasse (P) bereitgestellt ist, eine gebogene Form aufweist.

6. Beuteltyp-Sekundärbatterie (10) nach Anspruch 1, wobei ein innerer Umfang eines Bereichs des ersten Dichtungsteils (410), welcher an einem Bereich innerhalb des vorbestimmten Abstands (R) von dem oberen Eckteil (510) des Umfangs der Tasse (P) bereitgestellt ist, geradlinige und gebogene Formen aufweist.

7. Beuteltyp-Sekundärbatterie (10) nach Anspruch 5 oder 6, wobei die gebogene Form dazu gebildet ist, von der Elektrodenanordnung (100) betrachtet konkav zu sein.

8. Beuteltyp-Sekundärbatterie (10) nach Anspruch 5 oder 6, wobei die gebogene Form dazu gebildet ist, von der Elektrodenanordnung (100) betrachtet konvex zu sein.

9. Beuteltyp-Sekundärbatterie (10) nach Anspruch 3, wobei die Beuteltyp-Außenseite (200) einen ersten Bereich (210) und einen zweiten Bereich (220) umfasst,
in der Beuteltyp-Außenseite (200) ein Faltungsteil (F) an einer Grenze zwischen dem ersten Bereich (210) und dem zweiten Bereich (220) derart gebildet ist, dass, wenn der erste Bereich (210) bezüglich des zweiten Bereichs (220) gefaltet wird, der erste Bereich (210) und der zweite Bereich (220) zueinander weisen,
ein Ende aus einem linken Ende und einem rechten Ende des ersten Dichtungsteils (410), welches dazu bereitgestellt ist, benachbart zu dem Faltungsteil (F) zu sein, an einem Bereich innerhalb des vorbestimmten Abstands (R) von dem oberen Eckteil (510) des Umfangs der Tasse (P) gebildet ist, und
ein Ende aus einem linken Ende und einem rechten Ende des zweiten Dichtungsteils (420), welches dazu bereitgestellt ist, benachbart zu dem Faltungsteil (F) zu sein, an einem Bereich innerhalb des vorbestimmten Abstands (R) von dem unteren Eckteil (520) des Umfangs der Tasse (P) gebildet ist.

10. Beuteltyp-Sekundärbatterie (10) nach Anspruch 3, wobei der Dichtungsteil (400) ferner einen dritten Dichtungsteil (430) umfasst, welcher dazu gebildet ist, den ersten Dichtungsteil (410) mit dem zweiten Dichtungsteil (420) zu verbinden.

11. Beuteltyp-Sekundärbatterie (10) nach Anspruch 10, wobei ein oberes Ende des dritten Dichtungsteils (430) mit dem ersten Dichtungsteil (410) verbunden ist, und
ein unteres Ende des dritten Dichtungsteils (430) mit dem zweiten Dichtungsteil (420) verbunden ist.

12. Beuteltyp-Sekundärbatterie (10) nach einem der Ansprüche 1 bis 11, wobei wenigstens einer oder mehrere aus dem oberen Eckteil (510) und dem unteren Eckteil (520) eine abgerundete Form aufweist.

13. Beuteltyp-Sekundärbatterie (10) nach Anspruch 1, wobei der erste Dichtungsteil (410) umfasst:
einen normalen Leitung-Dichtungsbereich (S1), an welchem ein Bereich, welcher oberhalb des Bereichs innerhalb des vorbestimmten Abstands (R) von dem oberen Eckteil (510) des Umfangs der Tasse (P) angeordnet ist, durch ein Abdichtungswerkzeug abgedichtet ist, um die erste Elektrodenleitung (310) zu bedecken; und
ein zusätzlicher Dichtungsbereich (S2), an welchem der Bereich innerhalb des vorbestimmten Abstands (R) von dem oberen Eckteil (510) des Umfangs der Tasse (P) durch das Abdichtungswerkzeug abgedichtet ist.

14. Beuteltyp-Sekundärbatterie (10) nach Anspruch 13, wobei der normale Leitung-Dichtungsbereich (S1) und der zusätzliche Dichtungsbereich (S2) unterschiedliche Dichtungsdicken für jeden Abschnitt aufweisen.

15. Verfahren zum Herstellen einer Beuteltyp-Sekundärbatterie (10), das Verfahren umfassend:
einen Prozess eines Vorbereitens einer Elektrodenanordnung (100), welche eine Struktur aufweist, in welcher Elektroden und Separatoren abwechselnd angeordnet sind, sowie einer Beuteltyp-Außenseite (200), in welcher eine Tasse (P) gebildet ist, welche eine ausgenommene Form aufweist;
einen Prozess eines Aufnehmens der Elektrodenanordnung (100) in der Tasse (P);
einen Prozess eines Faltens der Außenseite (200), so dass ein Bereich und der andere Bereich der Außenseite zueinander weisen;
einen Prozess eines Anordnens einer ersten Elektrodenleitung (310), welche nach außen durch einen oberen Umfang der Außenseite (200) vorsteht, und einer zweiten Elektrodenleitung (320), welche nach außen durch einen unteren Umfang der Außenseite (200) vorsteht;
einen Prozess eines Bildens eines ersten Dichtungsteils (410) an der Außenseite (200), um die erste Elektrodenleitung (310) zu bedecken; und
einen Prozess eines Bildens eines zweiten Dichtungsteils (420) an der Außenseite (200), um die zweite Elektrodenleitung (320) zu bedecken, wobei in dem Prozess des Bildens des ersten Dichtungsteils (410) ein Ende des ersten Dichtungsteils (410) dazu abgedichtet wird, an einem Bereich innerhalb eines vorbestimmten Abstands (R) von dem oberen Eckteil (510) eines Umfangs der Tasse (P) gebildet zu werden,
wobei der Bereich innerhalb des vorbestimmten Abstands (R) von dem oberen Eckteil (510) des Umfangs der Tasse (P) definiert ist als eines aus:
einem virtuellen Kreis, welcher einen Radius (R) aufweist, welcher auf den oberen Eckteil (510) des Umfangs der Tasse (P) zentriert ist, oder
einen virtuellen Bogen (Q), welcher einen vorbestimmten Abstand (R) von dem oberen Eckteil (510) beabstandet ist, welcher eine abgerundete Form aufweist,
und wobei der vorbestimmte Abstand (R) 5 mm beträgt.

16. Verfahren nach Anspruch 15, wobei der Prozess des Bildens des ersten Dichtungsteils (410) einen zweistufigen Abdichtungsprozess umfasst, welcher einen normalen Leitung-Abdichtungsprozess und einen zusätzlichen Abdichtungsprozess umfasst.

17. Verfahren nach Anspruch 16, wobei der normale Leitung-Abdichtungsprozess ein Prozess eines Abdichtens eines Bereichs, welcher oberhalb des Bereichs innerhalb des vorbestimmten Abstands (R) von dem oberen Eckteil (510) des Umfangs der Tasse (P) angeordnet ist, durch ein Abdichtungswerkzeug ist, so dass ein Beutel des ersten Bereichs (210) und ein Beutel des zweiten Bereichs (220) die erste Elektrodenleitung (310) bedecken, um einen normalen Leitung-Dichtungsbereich (S1) zu bilden, und der zusätzliche Leitung-Abdichtungsprozess ein Prozess eines Abdichtens eines Bereichs, welcher innerhalb des vorbestimmten Abstands (R) von dem oberen Eckteil (510) des Umfangs der Tasse (P) angeordnet ist, durch das Abdichtungswerkzeug ist, so dass der Beutel des ersten Bereichs (210) und der Beutel des zweiten Bereichs (220) miteinander verbunden werden, um einen zusätzlichen Dichtungsbereich (S2) zu bilden.

18. Verfahren nach Anspruch 17, wobei in dem Prozess eines Bildens des ersten Dichtungsteils (410) der normale Leitung-Dichtungsbereich (S1) und der zusätzliche Dichtungsbereich (S2) unterschiedliche Dichtungsdicken für jeden Abschnitt aufweisen.

## Revendications

1. Batterie secondaire de type poche (10) comprenant :
un ensemble d'électrodes (100) ayant une structure, dans laquelle des électrodes et un séparateur sont disposés en alternance ;
un extérieur de type poche (200) dans lequel une coupelle (P) ayant une forme évidée pour héberger l'ensemble d'électrodes (100) est formée ; et
un conducteur d'électrode (300) électriquement connecté à l'ensemble d'électrodes (100) et faisant saillie vers l'extérieur à travers une circonférence de l'extérieur (200), dans laquelle une partie de scellage (400) est formée sur l'extérieur (200) le long de la circonférence de l'ensemble d'électrodes (100),
le conducteur d'électrode (300) comprend un premier conducteur d'électrode (310) faisant saillie vers l'extérieur à travers une circonférence supérieure de l'extérieur (200),
la partie de scellage (400) comprend une première partie de scellage (410) formée pour recouvrir le premier conducteur d'électrode (310), et
une extrémité (410-1) de la première partie de scellage (410) est formée sur une zone dans les limites d'une distance prédéterminée (R) par rapport à une partie de coin supérieure (510) d'une circonférence de la coupelle (P),
dans laquelle la zone dans les limites de la distance prédéterminée (R) par rapport à la partie de coin supérieure (510) de la circonférence de la coupelle (P) est définie comme étant l'un parmi :
un cercle virtuel ayant un rayon (R) centré sur la partie de coin supérieure (510) de la circonférence de la coupelle (P), ou
un arc virtuel (Q) espacé de la distance prédéterminée (R) par rapport à la partie de coin supérieure (510) ayant une forme arrondie
et dans laquelle la distance prédéterminée (R) est de 5 mm.

2. Batterie secondaire de type poche (10) selon la revendication 1, dans laquelle les extrémités gauche et droite de la première partie de scellage (410) sont formée sur une zone dans les limites de ladite distance prédéterminée (R) par rapport à une partie de coin supérieure gauche (510), et une zone dans les limites de ladite distance prédéterminée (R) par rapport à une partie de coin supérieure droite de la circonférence de la coupelle (P), respectivement.

3. Batterie secondaire de type poche (10) selon la revendication 1, dans laquelle le conducteur d'électrode (300) comprend un deuxième conducteur d'électrode (320) faisant saillie vers l'extérieur à travers une circonférence inférieure de l'extérieur (200), la partie de scellage (400) comprend une deuxième partie de scellage (420) formée pour recouvrir le deuxième conducteur d'électrode (320), et
une extrémité de la deuxième partie de scellage (420) est formée sur une zone dans les limites de ladite distance prédéterminée (R) par rapport à une partie de coin inférieure (520) de la circonférence de la coupelle (P).

4. Batterie secondaire de type poche (10) selon la revendication 1, dans laquelle une circonférence interne d'une zone de la première partie de scellage (410), qui est ménagée sur une zone dans les limites de ladite distance prédéterminée (R) par rapport à la partie de coin supérieure (510) de la circonférence de la coupelle (P), possède une forme rectiligne.

5. Batterie secondaire de type poche (10) selon la revendication 1, dans laquelle une circonférence interne d'une zone de la première partie de scellage (410), qui est ménagée sur une zone dans les limites de ladite
distance prédéterminée (R) par rapport à la partie de coin supérieure (510) de la circonférence de la coupelle (P), possède une forme incurvée.

6. Batterie secondaire de type poche (10) selon la revendication 1, dans laquelle une circonférence interne d'une zone de la première partie de scellage (410), qui est ménagée sur une zone dans les limites de ladite distance prédéterminée (R) par rapport à la partie de coin supérieure (510) de la circonférence de la coupelle (P), possède des formes rectilignes et incurvées.

7. Batterie secondaire de type poche (10) selon la revendication 5 ou 6, dans laquelle la forme incurvée est formée pour être concave lorsqu'on l'observe depuis l'ensemble d'électrodes (100).

8. Batterie secondaire de type poche (10) selon la revendication 5 ou 6, dans laquelle la forme incurvée est formée pour être convexe lorsqu'on l'observe depuis l'ensemble d'électrodes (100).

9. Batterie secondaire de type poche (10) selon la revendication 3, dans laquelle l'extérieur de type poche (200) comprend une première zone (210) et une deuxième zone (220),
dans l'extérieur de type poche (200), une partie de pliage (F) est formée sur une frontière entre la première zone (210) et la deuxième zone (220) de sorte que, lorsque la première zone (210) est pliée par rapport à la deuxième zone (220), la première zone (210) et la deuxième zone (220) sont l'une en face de l'autre,
une extrémité parmi une extrémité gauche et une extrémité droite de la première partie de scellage (410), qui est ménagée pour être adjacente à la partie de pliage (F), est formée sur une zone dans les limites de ladite distance prédéterminée (R) par rapport à la partie de coin supérieure (510) de la circonférence de la coupelle (P), et
une extrémité parmi une extrémité gauche et une extrémité droite de la deuxième partie de scellage (420), qui est ménagée pour être adjacente à la partie de pliage (F), est formée sur une zone dans les limites de ladite distance prédéterminée (R) par rapport à la partie de coin inférieure (520) de la circonférence de la coupelle (P).

10. Batterie secondaire de type poche (10) selon la revendication 3, dans laquelle la partie de scellage (400) comprend en outre une troisième partie de scellage (430) formée pour relier la première partie de scellage (410) à la deuxième partie de scellage (420).

11. Batterie secondaire de type poche (10) selon la revendication 10, dans laquelle une extrémité supérieure de la troisième partie de scellage (430) est reliée à la première partie de scellage (410), et
une extrémité inférieure de la troisième partie de scellage (430) est reliée à la deuxième partie de scellage (420).

12. Batterie secondaire de type poche (10) selon l'une quelconque des revendications 1 à 11, dans laquelle au moins l'une ou plusieurs parmi la partie de coin supérieure (510) et la partie de coin inférieure (520) possèdent une forme arrondie.

13. Batterie secondaire de type poche (10) selon la revendication 1, dans laquelle la première partie de scellage (410) comprend :
une zone de scellage normal de conducteur (S1) sur laquelle une zone disposée au-dessus de la zone dans les limites de ladite distance prédéterminée (R) par rapport à la partie de coin supérieure (510) de la circonférence de la coupelle (P) est scellée pour recouvrir le premier conducteur d'électrode (310) par un outil de scellage ; et
une zone de scellage supplémentaire (S2) sur laquelle la zone dans les limites de ladite distance prédéterminée (R) par rapport à la partie de coin supérieure (510) de la circonférence de la coupelle (P) est scellée par l'outil de scellage.

14. Batterie secondaire de type poche (10) selon la revendication 13, dans laquelle la zone de scellage normal de conducteur (S1) et la zone de scellage supplémentaire (S2) possèdent différentes épaisseurs de scellage pour chaque section.

15. Procédé de fabrication d'une batterie secondaire de type poche (10), le procédé comprenant :
un processus de préparation d'un ensemble d'électrodes (100) ayant une structure, dans laquelle des électrodes et des séparateurs sont disposés en alternance, et un extérieur de type poche (200), dans lequel une coupelle (P) ayant une forme évidée est formée ;
un processus d'hébergement de l'ensemble d'électrodes (100) dans la coupelle (P) ;
un processus de pliage de l'extérieur (200) de sorte qu'une zone et l'autre zone de l'extérieur soient l'une en face de l'autre ;
un processus de disposition d'un premier conducteur d'électrode (310) faisant saillie vers l'extérieur à travers une circonférence supérieure de l'extérieur (200) et d'un deuxième conducteur d'électrode (320) faisant saillie vers l'extérieur à travers une circonférence inférieure de l'extérieur (200) ;
un processus de formation d'une première partie de scellage (410) sur l'extérieur (200) pour recouvrir le premier conducteur d'électrode (310) ; et
un processus de formation d'une deuxième partie de scellage (420) sur l'extérieur (200) pour recouvrir le deuxième conducteur d'électrode (320),
dans lequel, lors du processus de formation de la première partie de scellage (410), une extrémité de la première partie de scellage (410) est scellée pour être formée sur une zone dans les limites d'une distance prédéterminée (R) par rapport à la partie de coin supérieure (510) d'une circonférence de la coupelle (P),
dans laquelle la zone dans les limites de la distance prédéterminée (R) par rapport à la partie de coin supérieure (510) de la circonférence de la coupelle (P) est définie comme étant l'un parmi :
un cercle virtuel ayant un rayon (R) centré sur la partie de coin supérieure (510) de la circonférence de la coupelle (P), ou
un arc virtuel (Q) espacé d'une distance prédéterminée (R) par rapport à la partie de coin supérieure (510) ayant une forme arrondie,
et dans lequel la distance prédéterminée (R) est de 5 mm.

16. Procédé selon la revendication 15, dans lequel le processus de formation de la première partie de scellage (410) comprend un processus de scellage en deux étapes comprenant un processus de scellage normal de conducteur et un processus de scellage supplémentaire.

17. Procédé selon la revendication 16, dans lequel le processus de scellage normal de conducteur est un processus de scellage d'une zone, qui est disposée au-dessus de la zone dans les limites de la distance prédéterminée (R) par rapport à la partie de coin supérieure (510) de la circonférence de la coupelle (P), par le biais d'un outil de scellage de sorte qu'une poche de la première zone (210) et qu'une poche de la deuxième zone (220) recouvrent le premier conducteur d'électrode (310) pour former une zone de scellage normal de conducteur (S1), et
le processus de scellage supplémentaire de conducteur est un processus de scellage d'une zone, qui est disposée dans les limites de la distance prédéterminée (R) par rapport à la partie de coin supérieure (510) de la circonférence de la coupelle (P), par le biais de l'outil de scellage de sorte que la poche de la première zone (210) et que la poche de la deuxième zone (220) soient liées l'un à l'autre pour former une zone de scellage supplémentaire (S2).

18. Procédé selon la revendication 17, dans lequel, lors du processus de formation de la première partie de scellage (410), la zone de scellage normal de conducteur (S1) et la zone de scellage supplémentaire (S2) possèdent différentes épaisseurs de scellage pour chaque section.
